# EUROPÄISCHE PATENTSCHRIFT

(11) **EP 3 187 760 B1**
(45) Veröffentlichungstag und Bekanntmachung des Hinweises auf die Patenterteilung: **29.01.2020**
(21) Anmeldenummer: 16205898.6
(22) Anmeldetag: 21.12.2016
(51) Int. Cl.: F16K 47/08

(54) **VENTILKÄFIG ZUM AUFNEHMEN EINES VENTILGLIEDS UND VERFAHREN ZUM BETÄTIGEN EINES STELLVENTILS MIT EINEM VENTILKÄFIG UND EINEM VENTILGLIED**
VALVE CAGE FOR RECEIVING A VALVE MEMBER AND METHOD FOR ACTUATING A CONTROL VALVE WITH A VALVE CAGE AND A VALVE MEMBER
CAGE DE SOUPAPE DESTINÉE À LOGER UN ÉLÉMENT DE SOUPAPE ET PROCÉDÉ D'ACTIONNEMENT D'UNE SOUPAPE DE RÉGULATION COMPRENANT UNE CAGE DE SOUPAPE ET UN ÉLÉMENT DE SOUPAPE

(30) Priorität: 29.12.2015 DE 102015016902
(43) Veröffentlichungstag der Anmeldung: 05.07.2017
(73) Patentinhaber: Samson Aktiengesellschaft, 60314 Frankfurt am Main (DE)
(72) Erfinder: Bräuer, Anke, 63526 Erlensee (DE)
(74) Vertreter: Schmid, Nils T.F.

(56) Entgegenhaltungen:
- WO-A1-2011/095911
- WO-A1-2017/066221
- FR-A1- 2 306 390
- US-A- 430 042
- US-A- 4 705 071

## Beschreibung

Die Erfindung betrifft einen hülsenförmigen Ventilkäfig zum Aufnehmen eines Ventilglieds, wie einen Ventilkolben, eines Stellventils einer prozesstechnischen Anlage, wie einer chemischen Anlage, einer Lebensmittel verarbeitenden Anlage, einem Kraftwerk oder dergleichen. Die Erfindung betrifft auch ein Verfahren zum Betätigen eines Stellventils einer prozesstechnischen Anlage, das einen Ventilkäfig und ein Ventilglied aufweist.

Typischerweise ist ein Ventilkäfig dazu ausgelegt, das Ventilglied relativ zum Ventilkäfig zwischen einer Schließstellung, in der das Ventilglied eine Strömung von Prozessfluid durch das Stellventil verhindert, und einer Öffnungsstellung, in der der Ventilkäfig mit dem Ventilglied eine Öffnungsfläche für eine Prozessfluidströmung freigibt, entlang einer Stellrichtung zu führen. Der Ventilkäfig stellt dabei abhängig von der Stellposition des Ventilglieds unterschiedliche Drosselquoten bereit. Die Drosselquote kann beispielsweise abhängig sein von dem Strömungswiderstand, den die von dem Ventilglied freigegebene Öffnungsfläche des Ventilkäfigs einer Prozessfluidströmung durch das Stellventil entgegenstellt.

Wenn das Ventilglied sich in der Öffnungsstellung befindet, ist in der Regel die maximal verfügbare Öffnungsfläche oder Totalöffnungsfläche des Ventilkäfigs durch das Ventilglied offengelegt, so dass das Prozessfluid durch die Totalöffnungsfläche des Ventilkäfigs fließen kann. In dem Ventilkäfig können eine oder mehrere Öffnungen vorgesehen sein, die bei der Bewegung des Ventilglieds von der Schließstellung zur Öffnungsstellung zunehmend freigelegt werden. Der Strömungswiderstand, den das Ventilglied mit dem Ventilkäfig der Prozessfluidströmung entgegenstellt, hängt unter anderem ab von der Größe und Form derjenigen Öffnungen, die in einer jeweiligen Stellposition des Ventilglieds freigelegt sind.

Bekannte Ventilkäfige haben klassischerweise entlang der Stellrichtung gleichmäßig verteilte Öffnungen einheitlicher Größe. Indem das Ventilglied in einem solchen klassischen Ventilkäfig geführt verlagerbar ist, kann die verfügbare Öffnungsfläche des Ventilkäfigs im Wesentlichen proportional zu einer Verlagerung des Ventilglieds in dem Ventilkäfig freigegeben werden. Die Drosselquote ändert sich dann entsprechend im Wesentlichen proportional zu der Verlagerung des Ventilglieds in dem Ventilkäfig, und bei konstantem Druck stromaufwärts des Stellventils kann ein zunehmend größer werdender Massestrom der Fluidströmung durch das Stellventil bzw. die bereitgestellte Öffnungsfläche fließen.

Es hat sich herausgestellt, dass es je nach Einsatzgebiet des Stellventils wünschenswert sein kann, dem Stellventil bei gleichbleibend hohem stromaufwärtigen Druck einerseits einen ersten Stellbereich mit erheblichem Strömungswiderstand bzw. erheblicher Drosselquote bereitzustellen, und dem Stellventil andererseits aber auch einen zweiten Stellbereich mit geringem Strömungswiderstand zur Verfügung zu stellen. Stellventile mit klassischem Ventilkäfig gleichmäßig verteilter Öffnungen konstanter Größe erzeugen jedoch insbesondere bei hohen Prozessfluiddrücken stets einen deutlichen Strömungswiderstand und einen damit verbundenen Druckabfall durch das Stellventil.

Als Weiterentwicklung der klassischen Ventilkäfige haben sich daher Ventilkäfige etabliert, die sowohl einen Drosselbereich für einen druckreduzierten Durchfluss der Prozessfluidströmung mit mehreren Drosselkanäle umfassen, die sich von einer Innenseite des Ventilkäfigs an dessen Außenseite erstrecken, als auch einen in Stellrichtung zum Drosselbereich benachbarten Volldurchflussbereich mit Ausgleichskanälen für große Durchflussmengen der Prozessfluidströmung. Solche Ventilkäfige sind bekannt beispielsweise von WO 2011/118863 A1 oder WO 2014/070977 A1.

WO 2011/118863 A1 beschreibt einen Ventilkäfig mit einem Drosselbereich, in dem erste bis dritte Drosselkanäle nebeneinander angeordnet sind, die einen länglichen Querschnitt haben, der relativ zu der Achse des Ventilkäfigs geneigt ist. In Strömungsrichtung, d.h. radial zu der Achse des Ventilkäfigs, verlaufen die Drosselkanäle stufen- bzw. labyrinthartig, um auf diese Weise eine druckreduzierende Drosselwirkung bereitzustellen. In Axialrichtung oberhalb des Drosselbereichs können Durchlassfenster vorgesehen sein, die einen Durchfluss großer Mengen an Prozessfluid durch den Ventilkäfig erlauben und dazu ungestuft geradlinig in Radialrichtung durch die Wand des Ventilkäfigs verlaufen. Bei dem von WO 2011/118863 A1 bekannten Ventilkäfig hat sich als unvorteilhaft erwiesen, dass in dem Bereich zwischen dem in Axialrichtung obersten Drosselkanal und dem dazu in Axialrichtung benachbarten Durchlassfenster eine Totzone vorliegt, so dass beim Verlagern des Ventilkolbens in dem Ventilkäfig trotz einer Bewegung des Ventilkolbens in der Totzone sich der Volumenstrom der Prozessfluidströmung nicht ändert, was in der Regel dazu führt, dass das Verlagern des Ventilkolbens übersteuert wird.

Dieses Problem wird mit dem Ventilkäfig gemäß WO 2014/070977 A1 adressiert. In diesem Ventilkäfig ist zwischen dem schalldämpfenden Drosselbereich, in dem aufeinanderliegende ringförmige Hülsenscheiben mit radialen Drosselkanalöffnungen vorgesehen sind, und einem in Axialrichtung benachbarten Volldurchflussbereich bzw. Hochleistungsdurchflussbereich, der durch eine Hülse mit mehreren Durchlassfenstern gebildet ist, ein Übergangsbereich vorgesehen. In dem Übergangsbereich sind Übergangsöffnungen realisiert in Form von Einschnitten an der Stirnseite der Durchlassfenster-Hülse, mit denen die Durchlassfenster-Hülse auf die oberste Drosselbereich-Hülsenscheibe aufgesetzt wird, sodass eine Totzone vermieden wird. Die Regelbarkeit eines Stellventils mit einem Ventilkäfig gemäß WO 2014/070977 A1 hat sich allerdings als immer noch unbefriedigend herausgestellt.

WO 2017/066 A1 betrifft einen linearen Ventilkäfig hoher Kapazität.

Es ist eine Aufgabe der Erfindung, die Nachteile des Standes der Technik zu überwinden und insbesondere einen Ventilkäfig und ein Betätigungsverfahren für ein Stellventil bereitzustellen, der bzw. das einem Stellventil sowohl einen deutlich drosselnden Betriebszustand wie auch einen Betriebszustand zum Durchlassen ungedrosselter, großer Volumenströme erlaubt, wobei Regelbarkeit insbesondere beim Wechseln zwischen Drosselbetrieb und Durchlassbetrieb gegenüber herkömmlichen Lösungen verbessert ist.

Diese Aufgabe wird gelöst durch den Gegenstand der unabhängigen Ansprüche.

Die Erfindung betrifft einen hülsenförmigen Ventilkäfig zum Aufnehmen eines Ventilglieds, wie einen Ventilkolben, eines Stellventils einer prozesstechnischen Anlage, wie eine chemische Anlage, eine Lebensmittel verarbeitende Anlage, ein Kraftwerk oder dergleichen. Der hülsenförmige Ventilkäfig kann vorzugsweise eine im Wesentlichen hohlzylindrische Form aufweisen, die eine Zylinder- oder Hülsenachse definiert sowie bezüglich der Hülsenachse radiale Richtungen und eine relativ zu der Hülsenachse umfängliche Richtung. Zum Montieren des hülsenförmigen Ventilkäfigs in einem Stellventil kann der hülsenförmige Ventilkäfig insbesondere stirnseitig eines zylinderhülsenförmigen Bereichs flanschartig auskragende Bereiche aufweist. Das Ventilglied, beispielsweise der Ventilkolben, des Stellventils ist vorzugsweise im Inneren des hülsenförmigen Ventilkäfigs verlagerbar angeordnet. Vorzugsweise hat das Ventilglied einen Außenumfang, der korrespondierend zu dem Innenumfang des Ventilkäfigs ausgelegt ist. Insbesondere begrenzt der Ventilkäfig einen zylinderförmigen Innenraum mit einem Innendurchmesser. Der Ventilkolben kann insbesondere vollzylindrisch oder hohlzylindrisch sein und hat vorzugsweise einen Außenumfang mit einem Außendurchmesser, der zu dem Innendurchmesser des Ventilkäfigs korrespondiert. Vorzugsweise sind der Ventilkäfig-Innendurchmesser und der Ventilglied-Außendurchmesser derart aufeinander abgestimmt, dass eine Spiel-Passung oder Gleit-Passung realisiert ist, so dass eine Relativbewegung des Ventilglieds in dem Ventilkäfig verschleißfrei oder zumindest verschleißarm realisierbar ist.

Der erfindungsgemäße Ventilkäfig ist dazu ausgelegt, das Ventilglied relativ zum Ventilkäfig zwischen einer Schließstellung, in der das Ventilglied eine Strömung von Prozessfluid durch das Stellventil verhindert, und einer Öffnungsstellung, in der der Ventilkäfig mit dem Ventilglied eine Öffnungsfläche für eine Prozessfluidströmung freigibt, entlang einer Stellrichtung zu führen und abhängig von der Stellposition des Ventilglieds, also der vorliegenden Position des Ventilglieds entlang der Stellrichtung, unterschiedliche Drosselquoten bereitzustellen.

Der erfindungsgemäße hülsenförmige Ventilkäfig umfasst einen Drosselbereich für kleine, insbesondere druckreduzierte Durchflussmengen von Prozessfluid mit mehreren Drosselkanälen, die sich von einer Innenseite des Ventilkäfigs an dessen Außenseite erstrecken. Die Anzahl der Drosselkanäle kann wenigstens 10, wenigstens 50, wenigstens 100, wenigstens 200, wenigstens 400, wenigstens 600 oder wenigstens 800 betragen. Vorzugsweise ist die Anzahl der Drosselkanäle kleiner als 3000, kleiner als 1500, kleiner als 700, kleiner als 500, kleiner als 300 oder kleiner als 150. Insbesondere weist ein hülsenförmiger Ventilkäfig zwischen 300 und 3000 Drosselkanäle auf. Der Drosselbereich kann definiert sein als der sich in Axialrichtung erstreckende Bereich des hülsenförmigen Ventilkäfigs, der sich zwischen zwei in Axialrichtung am weitesten voneinander beabstandeten Drosselkanäle erstreckt. Vorzugsweise erstreckt sich der Drosselbereich also von einem in Stellrichtung ersten Drosselkanal bis zu einem in Stellrichtung letzten Drosselkanal. Insbesondere ist der Drosselbereich ein zylinderringförmiger Bereich des Ventilkäfigs, der sich in Axialrichtung exakt so weit erstreckt, dass sich sämtliche Drosselkanäle des Ventilkäfigs in dem Drosselbereich befindet, d.h. ohne dass der Drosselbereich Axialbereiche des Ventilkäfigs mitumfasst, die vollständig frei von Drosselkanälen sind. Der Drosselbereich erstreckt sich also insbesondere nur über den axialen Bereich des Ventilkäfigs, in dem sich sämtliche Drosselkanäle befinden. Der hülsenförmige Ventilkäfig kann die Drosselkanäle in seiner vorzugsweise zylinderhülsenförmigen Wandung aufweisen. Um durch die Drosselkanäle des Ventilkäfigs fließen zu können, tritt das Prozessfluid in den Innenraum des Ventilkäfigs ein. Die Innenseite des Ventilkäfigs definiert also eine Einlassfläche für Prozessfluidströmung. Diese Einlassfläche für Prozessfluid kann vorzugsweise derart bemessen sein, dass sie im Wesentlichen der Querschnittsfläche des Stellventileingangs und/oder des Stellventilausgangs entspricht. Vorzugsweise sind die Drosselkanäle derart bemessen, dass die Querschnittsfläche eines Drosselkanals, insbesondere eines jeden Drosselkanals kleiner ist als ein Hundertstel, als ein Fünfhundertstel, als ein Tausendstel, als ein Fünftausendstel oder als ein Zehntausendstel der Einlassfläche. Auf diese Weise kann eine deutliche druckreduzierende Drosselwirkung bereitgestellt werden.

Ferner umfasst der erfindungsgemäße hülsenförmige Ventilkäfig einen in Stellrichtung zum Drosselbereich benachbarten, insbesondere im Wesentlichen drosselungsfreien, Volldurchflussbereich für große Durchflussmengen von Prozessfluid, insbesondere mit wenigstens einem Durchlassfenster, das sich von der Innenseite an die Außenseite erstreckt. Vorzugsweise sind in dem Volldurchflussbereich angeordnete Öffnungen wesentlich größer als die Drosselkanäle, so dass der Strömungswiderstand einer Öffnung bzw. eines Durchlassfensters wesentlich geringer ist, als der Strömungswiderstand, den ein Drosselkanal bereitstellt.

Erfindungsgemäß ist in dem Ventilkäfig wenigstens ein sich von der Innenseite an die Außenseite des Ventilkäfigs erstreckender Ausgleichskanal eingebracht, der derart von dem Volldurchflussbereich in den Drosselbereich mündet, dass, bevor das Ventilglied sämtliche Drosselkanäle freigibt, der Ausgleichskanal bereits zumindest teilweise, insbesondere vollständig, freigegeben ist. Insbesondere sind die Überdeckung und die Freigabe des Drosselkanals und des Ausgleichskanals durch das Ventilglied derart durch die Kinematik und strukturelle Abstimmung zwischen Ventilkäfig und Ventilglied eingestellt, dass in einer Übergangsstellung des Ventilglieds für eine Teildrosselung der Ausgleichskanal immer noch zumindest teilweise für einen Durchfluss des Fluids offen ist, obgleich der große Volldurchflussbereich des Ventilkäfigs durch das Ventilglied vollständig geschlossen ist. Vorzugsweise sind nach dem vollständigen Schließen des Volldurchflussbereichs sämtliche Drosselkanäle des Drosselbereichs noch von dem Ventilglied freigegeben, wobei insbesondere gleiches für den Ausgleichskanal gilt. Auch wenn erste Drosselkanäle durch das Ventilglied längs seines Verschiebewegs geschlossen werden, bleibt der Volldurchflussbereich geschlossen, während der Ausgleichskanal noch teilweise für einen Fluiddurchfluss offen ist und bei kontinuierlicher Schließung der jeweiligen weiteren Drosselkanäle des jeweiligen Drosselbereichs auch allmählich verschlossen wird, indem dessen Durchflussquerschnitt je nach Verlagerungsgrad des Ventilglieds abnimmt. Insofern ist erfindungsgemäß vorgesehen, dass der Ausgleichskanal mit relativ großem Durchflussquerschnitt bereits geöffnet wird, obgleich noch ein gewisser Anteil, vorzugsweise geringer als 20 % oder 10 % der Drosselkanäle des Drosselbereichs noch durch das Ventilglied verschlossen sind.

Insbesondere erstreckt sich der wenigstens eine Ausgleichskanal derart von wenigstens einem Durchlassfenster längs der Axialrichtung oder Stellrichtung in den Drosselbereich, dass wenigstens eine Radialquerschnittsfläche, auf der die Hülsenachse senkrecht steht, wenigstens einen der mehreren Drosselkanäle sowie den wenigstens einen Ausgleichskanal schneidet.

Der erfindungsgemäß vorgesehene wenigstens eine Ausgleichskanal gewährleistet, dass beim Verlagern des Stellglieds aus der Schließposition in Richtung der Öffnungsstellung nicht bloß eine Totzone zwischen dem Drosselbereich und dem Volldurchflussbereich vermieden ist, sondern dass darüber hinaus gewährleistet ist, dass die Drosselquote sich abhängig von der Stellposition harmonisch, stetig und streng monoton steigend verhält. Auf diese Weise ist sichergestellt, dass abhängig von der Stellposition des Ventilglieds ein kontinuierlich veränderlicher Volumenstrom durch den Ventilkäfig und das Stellventil realisierbar ist, was eine besonders stabile Regelung des Stellventildurchflusses erlaubt. Eine schrittweise und/oder plötzliche Änderung des Volumenstroms bei einer kontinuierlichen Änderung der Stellposition wird mit dem erfindungsgemäßen Ventilkäfig vermieden.

Entgegen des in der Fachwelt vorherrschenden Vorurteils, wonach eine strenge Trennung zwischen Drosselbereich und Volldurchflussbereich unabdingbar ist, um einen Drosselbereich bereitstellen zu können, in dem der Ventilkäfig eine deutlich druckreduzierende Drosselwirkung bereitstellen kann, haben die Erfinder herausgefunden, dass ein adäquat bemessener Ausgleichskanal, der sich in den Drosselbereich erstreckt, ohne nennenswerte Beeinträchtigung der Drosselwirkung eine deutlich verbesserte Regelbarkeit bewirken kann.

Wenn das Ventilglied sich in der Öffnungsstellung befindet, ist vorzugsweise eine größtmögliche Öffnungsfläche oder Totalöffnungsfläche des Ventilkäfigs mit dem darin aufgenommenen Ventilglied bereitgestellt. Der Ventilkäfig hat Öffnungen, die abhängig von der Stellposition des Ventilglieds eine Teil-Öffnungsfläche bereitstellen. Die freigegebene oder bereitgestellte Teil-Öffnungsfläche hängt von der Geometrie des Ventilkäfigs und gegebenenfalls des Ventilglieds ab. Die Total-Öffnungsfläche entspricht vorzugsweise der Summe der Querschnittsflächen sämtlicher sich in Radialrichtung durch die Ventilkäfighülse erstreckender Öffnungen, durch die das Prozessfluid von einem stromaufwärtigen Eingang des Stellventils zu einem stromabwärtigen Ausgang des Stellventils fließen kann. Dabei kann der Ventilkäfig zahlreiche Öffnungen unterschiedlicher Konfigurationen, wie z.B. Größe, Form, Anordnung im Ventilkäfig entlang der Stellrichtung, etc., aufweisen. Abhängig von der Stellposition des Ventilglieds entlang der Stellrichtung sind demnach unterschiedlich viele, unterschiedlich große und/oder unterschiedlich geformte Durchflussöffnungen vom Ventilglied freigegeben, die eine gemeinsame Teil-Öffnungsfläche definieren, von der der Strömungswiderstand des Ventilkäfigs abhängig ist. Gegebenenfalls kann der Strömungswiderstand auch vom Verlauf der Öffnungen in Radialrichtung durch die Ventilkäfighülse abhängen. Die freigegebene Total- oder Teil-Öffnungsfläche bestimmt die Druckreduzierung von dem Prozessfluiddruck stromaufwärts des Ventilkäfigs zu dem Prozessfluiddruck stromabwärts des Ventilkäfigs, wobei klar ist, dass das neben der Form des Ventilkäfigs auch die Eigenschaften des Prozessfluids, insbesondere Dichte, Viskosität, Druck, etc., eine Auswirkung auf die Druckreduzierung im Ventilkäfig haben.

Die Drosselquote kann insbesondere definiert sein als das Verhältnis des Volumenstroms des Prozessfluids durch den Ventilkäfig in Abhängigkeit von der prozentualen Stellposition des Ventilglieds zwischen der Schließstellung und der Öffnungsstellung unter der Annahme im Übrigen konstanter Randgrößen, insbesondere betreffend die Eigenschaften des Prozessfluids. Diese Drosselquote verläuft stellpositionsabhängig insbesondere kontinuierlich steigend, monoton steigend, vorzugsweise streng monoton steigend. Insbesondere verläuft die Drosselquote ohne ein Volumenstromplateau, das sich zwischen zwei Stellpositionen bzw. entlang eines Stellwegs erstreckt, in dem trotz einer Änderung der Ventilglied-Stellposition keine Änderung der Volumenströmung erfolgt. Vorzugsweise verläuft die stellpositionsabhängige Drosselquote derart kontinuierlich, dass eine knickfreie Volumenstromkurve bereitgestellt ist, deren erste und/oder zweite Ableitung ebenfalls kontinuierlich bzw. monoton ist.

Bei einer bevorzugten Ausführung der Erfindung weist der Ventilkäfig ein insbesondere außerhalb des Drosselbereichs angeordnetes vorzugsweise rechteckiges Durchlassfenster für die großen Durchflussmengen auf, insbesondere mit abgerundeten Ecken. Derartige Durchlassfenster weisen gute Strömungseigenschaften auf und sind leicht zu fertigen. Das Durchlassfenster befindet sich vorzugsweise in Stellrichtung jenseits des letzten Drosselkanals. Beispielsweise kann sich ein Durchlassfenster in Axialrichtung wenigstens 5-mal, vorzugsweise 15- bis 20-mal so weit erstrecken wie ein Drosselkanal. Vorzugsweise kann sich ein Durchlassfenster in Umfangsrichtung wenigstens 10- oder 20-, insbesondere 20- bis 30-mal so weit erstrecken wie ein Drosselkanal. Die gesamte Querschnittsfläche des sich in den Drosselbereich erstreckenden Teils der Ausgleichskanäle misst vorzugsweise zwischen 2 % und 30 %, insbesondere zwischen 4 % und 22 %, der gesamten Querschnittsfläche der Drosselkanäle.

Die Durchflussquerschnittsfläche eines Durchlassfensters ist vorzugsweise wenigstens 10-mal so groß, vorzugsweise wenigstens 100-mal so groß wie die Querschnittsfläche eines Drosselkanals. Vorzugsweise ist die Fläche eines Durchlassfensters mehr als 200-mal so groß, insbesondere zwischen 300- und 500-mal so groß wie die Querschnittsfläche eines Drosselkanals. Der Drosselkörper kann genau ein Durchlassfenster, wenigstens ein Durchlassfenster oder mehrere Durchlassfenster aufweisen, vorzugsweise 5 bis 50, weiter bevorzugt 6 bis 30, besonders bevorzugt 6 bis 12. Die gesamte Öffnungsfläche des einen Durchlassfensters oder der mehreren Durchlassfenster beträgt vorzugsweise wenigstens 5 %, insbesondere wenigstens 30 %, weiter bevorzugt mehr als 50 %, besonders bevorzugt 70 % bis 80 %, vorzugsweise nicht mehr als 100 %, insbesondere nicht mehr als 30 %, der Einlassfläche. Vorzugsweise ist die Öffnungsfläche des Durchlassfensters oder der Durchlassfenster wenigstens so groß, etwa doppelt so groß oder etwa 5 mal so groß wie die gesamte Querschnittsfläche der Drosselkanäle. Bevorzugt beträgt die axiale Höhe wenigstens eines rechteckigen Durchlassfensters alleine 22 % bis 40 % einer kombinierten axialen Höhe wenigstens eines rechteckigen Durchlassfensters und dessen zugeordneten Ausgleichskanals.

Bei einer bevorzugten Weiterbildung der Erfindung bildet die Querschnittsfläche des sich in den Drosselbereich erstreckenden Teils eines Ausgleichskanals weniger als die Hälfte, weniger als ein Drittel oder weniger als 5 %, insbesondere weniger als 1 % der gesamten, gemeinsamen Querschnittsfläche des einen Ausgleichskanals und des wenigstens einen Durchlassfensters, vorzugsweise desjenigen Ausgleichskanals, der in das jeweilige Durchlassfenster übergeht. Auf diese Weise ist gewährleistet, dass der Hauptteil des Durchlassfensters sich jenseits des Drosselbereichs befindet, so dass die druckreduzierende Wirkung des Drosselbereichs durch den Ausgleichskanal allenfalls geringfügig beeinträchtigt ist. Bei einer bevorzugten Weiterbildung des hülsenförmigen Ventilkäfigs bildet die Querschnittsfläche des sich in den Drosselbereich erstreckenden Teils des Ausgleichskanals zwischen 3 % und 25 %, insbesondere zwischen 5 % und 17%, der gesamten, gemeinsamen Querschnittsfläche von einander zugeordnetem Ausgleichkanal und Durchlassfenster.

Bei einer bevorzugten Weiterbildung des erfindungsgemäßen Ventilkäfigs geht der wenigstens eine Ausgleichskanal mit einem abgerundeten Übergangsbereich in das Durchlassfenster über. Durch den abgerundeten Übergangsbereich werden lokale Druckspitzen des Prozessfluids beim Durchströmen des Ventilkäfigs vermieden, so dass Geräuschentwicklung und Verschleiß verringert werden können.

Eine bevorzugte Weiterbildung eines erfindungsgemäßen Ventilkäfigs mit mehr als einem Ausgleichskanal kann wenigstens ein Durchlassfenster aufweisen, das keinen Ausgleichskanal aufweist. Bei einer bevorzugten Ausführung eines erfindungsgemäßen Ventilkäfigs weist das wenigstens eine Durchlassfenster genau einen Ausgleichskanal auf. Vorzugsweise weist jedes Durchlassfenster wenigstens einen, insbesondere genau einen, Ausgleichskanal auf.

Bei einer bevorzugten Ausführung des hülsenförmigen Ventilkäfigs bildet der wenigstens eine Ausgleichskanal einen in Stellrichtung konkaven, insbesondere hyperbolischen oder parabolischen, Aussparungsquerschnitt in dem Ventilkäfig. Eine konkave, beispielsweise hyperbolische oder parabolische Querschnittsform bewirkt, dass beim Verlagern des Stellglieds relativ zum Ventilkäfig die Querschnittsfläche des Ausgleichskanals, die zunehmend von dem Ventilglied freigegeben wird, sowohl in Stellrichtung wie auch quer zur Stellrichtung anwächst, was einen harmonischen Übergang zwischen dem Drosselbereich und dem Volldurchflussbereich gestattet.

Bei einer bevorzugten Ausführung der Erfindung erstreckt sich der wenigstens eine Ausgleichskanal in Stellrichtung über wenigstens 1 %, wenigstens 5 %, wenigstens 10 %, wenigstens 15 %, wenigstens 25 %, wenigstens 50 %, wenigstens 75 %, wenigstens 90 % und/oder über höchstens 95 %, höchstens 50 %, höchstens 30 % oder höchstens 10 % des Drosselbereichs. Alternativ kann sich der wenigstens eine Ausgleichskanal über den gesamten Drosselbereich erstrecken, vorzugsweise also von dem in Stellrichtung ersten bis zum in Stellrichtung letzten Drosselkanal. Eine weite Erstreckung in den Drosselbereich kann bevorzugt sein, um eine stetige, besonders harmonische Überlagerung von Volumenstrom durch die Drosselkanäle und den Ausgleichskanal zu gewährleisten. Es hat sich gezeigt, dass bereits ein nur geringfügig in den Drosselbereich mündender Ausgleichskanal grundsätzlich dafür genügt, eine verbesserte Regelbarkeit beim Übergang des Ventilglieds aus dem Drosselbereich in den Volldurchflussbereich, oder umgekehrt, zu gewährleisten. Bei einem hülsenförmigen Ventilkäfig mit mehreren Ausgleichskanälen sei klar, dass vorzugsweise sämtliche Ausgleichskanäle sich gleich weit erstrecken. Es ist aber auch denkbar, dass bei mehreren Ausgleichskanälen unterschiedliche Erstreckungslängen der Ausgleichskanäle bereitgestellt sind. Insbesondere kann jeder Ausgleichskanal eines Ventilkäfigs sich unterschiedlich weit in den Drosselbereich erstrecken.

Bei einer bevorzugten Ausführung eines erfindungsgemäßen Ventilkäfigs definieren die Drosselkanäle und die Durchlassfenster bzw. der Drosselbereich und der Durchlassbereich einen sich in Axialrichtung des Ventilkäfigs erstreckenden Öffnungsbereich. Vorzugsweise beginnt der Ausgleichskanal nach wenigstens 30 % und/oder höchstens 63 %, vorzugsweise bei 50% der axialen Höhe des Öffnungsbereichs. Vorzugsweise beginnt der Volldurchflussbereich nach wenigstens 51 % und/oder höchstens 83 %, vorzugsweise bei 65 % bis 75 %, insbesondere 73 % oder 67 %, der axialen Höhe des Öffnungsbereichs.

Bei einer bevorzugten Ausführung eines erfindungsgemäßen hülsenförmigen Ventilkäfigs definieren die mehreren Drosselkanäle jeweils eine runde, vorzugsweise kreisförmige, Querschnittsfläche. Insbesondere realisieren Bohrungen durch den Ventilkäfig die Drosselkanäle. Die Drosselkanäle können derart ausgelegt sein, dass die Länge eines Drosselkanals in Radialrichtung der Ventilkäfighülse größer ist, vorzugsweise wenigstens zweimal, wenigstens fünfmal oder wenigstens zehnmal so groß ist, wie der Durchmesser des jeweiligen Drosselkanals, insbesondere jedoch höchstens 6,5 mal so groß. Vorzugsweise ist die Länge eines Drosselkanals zwischen 2,250 und 6,375 mal so groß wie der Durchmesser.

Bei einer bevorzugten Ausführung der Erfindung weist der Ventilkäfig im Drosselbereich Drosselkanäle unterschiedlicher Form und/oder Größe auf, wobei insbesondere die Größe der Öffnungsfläche unterschiedlicher Drosselkanäle in Stellrichtung zum Volldurchflussbereich hin zunimmt. Alternativ können aber auch alle Drosselkanäle gleiche Querschnitte und/oder gleichartige Formen haben, was die Fertigung vereinfacht.

Bei einer bevorzugten Ausführung der Erfindung ist der Ventilkäfig einstückig. Eine einstückige Ausführung des Ventilkäfigs verringert die Anfälligkeit des Ventilkäfigs gegenüber Vibrationen, die bei Durchströmung mit Prozessfluid auftreten können. Auf diese Weise können die Geräuschentwicklung und der Verschleiß am Ventilkäfig verringert werden.

Die Erfindung betrifft auch ein Stellventil für eine prozesstechnische Anlage, wie eine chemische Anlage, eine Lebensmittel verarbeitende Anlage, ein Kraftwerk oder dergleichen, das einen erfindungsgemäßen Ventilkäfig, wie oben beschrieben, und ein in dem Ventilkäfig aufgenommenes Ventilglied, wie einen Ventilkolben, aufweist.

Die Erfindung betrifft ferner ein Verfahren zum Betätigen eines Stellventils einer prozesstechnischen Anlage, wie einer chemischen Anlage, einer Lebensmittel verarbeitenden Anlage, einem Kraftwerk oder dergleichen, wobei das Stellventil einen Ventilkäfig und ein Ventilglied, wie einen Ventilkolben aufweist.

Bei dem Betätigungsverfahren wird das Ventilglied relativ zu dem Ventilkäfig zum Einstellen einer Prozessfluidströmung verlagert beziehungsweise verfahren von einer Schließstellung, in der mit dem Ventilglied verhindert wird, dass Prozessfluid durch das Stellventil strömt, in eine Öffnungsstellung, in der vom Ventilkäfig und dem Ventilglied gemeinsam eine Öffnungsfläche für die Prozessfluidströmung freigegeben wird. Vorzugsweise erfolgt das Verlagern des Ventilglieds geführt in und gegebenenfalls von dem Ventilkäfig.

Beim Verlagern des Ventilglieds von der Schließstellung in Richtung zur Öffnungsstellung wird vom Ventilglied zunächst ein Drosselbereich des Ventilkäfigs freigegeben, um eine kleine, insbesondere druckreduzierte Durchflussmengen von Prozessfluid durch mehrere Drosselkanäle zuzulassen. Eine solche gedrosselte Prozessfluidströmung geringer Durchflussmenge weist stromabwärts des Ventilkäfigs einen erheblich geringeren Druck auf als stromaufwärts des Ventilkäfigs, wobei Drosselkanäle in dem Drosselbereich gewährleisten, dass keine große Geräuschentwicklung mit der Änderung der Eigenschaften der Prozessfluidströmung einhergeht. Drosselnde Ventilkäfige können daher auch als Schalldämpfer bezeichnet sein.

Bei dem erfindungsgemäßen Betätigungsverfahren wird, nachdem der Drosselbereich von dem Ventilglied freigegeben wird, ein Volldurchflussbereich des Ventilkäfigs für eine große Durchflussmenge von Prozessfluid durch den Ventilkäfig freigegeben. Bei im Wesentlichen gleichbleibenden Prozessparametern stromaufwärts des Ventilkäfigs, beispielsweise betreffend Druck, Temperatur, Viskosität und/oder Dichte des Prozessfluids, kann durch das Freigeben eines Volldurchflussbereichs zusätzlich zu dem Drosselbereich erreicht werden, dass ein Großteil des Prozessfluids im Wesentlichen ungehindert durch den Ventilkäfig durch dessen Volldurchflussbereich fließen kann, oder nur mit einem Strömungswiderstand, der um wenigstens eine oder mehrere Größenordnungen geringer ist als der Strömungswiderstand, der durch den Drosselbereich generiert werden kann.

Erfindungsgemäß wird bei dem Betätigungsverfahren ein Ausgleichskanal freigegeben, der sich aus dem Drosselbereich in den Volldurchflussbereich erstreckt, bevor sämtliche Drosselkanäle von dem Ventilglied freigegeben werden. Das Freigeben des Drosselbereichs erlaubt es, eine kontinuierliche Volumenstromänderung in Abhängigkeit von einer Änderung der Stellposition des Ventilglieds relativ zu dem Ventilkäfig zu gewährleisten. Ein solches Betätigungsverfahren für ein Stellventil erlaubt es, zwischen einer drosselnden und einer volldurchlassenden (nur geringfügig bis gar nicht drosselnden) Wirkung eines Stellventils zu wechseln, ohne dass beim Übergang zwischen Drosselbetrieb und Durchlassbetrieb Regelungsschwierigkeiten auftreten.

Bei einer bevorzugten Ausführung des erfindungsgemäßen Betätigungsverfahrens wird beim Verlagern des Ventilglieds von der Schließstellung in die Öffnungsstellung der Volumenstrom der Prozessfluidströmung abhängig von einer Stellposition des Ventilglieds kontinuierlich und streng monoton gesteigert.

Vorzugsweise funktioniert das Betätigungsverfahren gemäß der Funktionsweise des oben beschriebenen Ventilkäfigs oder des oben beschriebenen Stellventils. Es sei klar, dass der oben beschriebene Drosselkörper bzw. das oben beschriebene Stellventil vorzugsweise derart ausgestaltet sein kann, gemäß dem erfindungsgemäßen Betätigungsverfahren zu wirken.

Insbesondere ist der K_{V}- Wert oder Durchflusskoeffizent durch die Öffnungen des Ventilkäfigs derart konfiguriert, dass bei voll geöffnetem Ventilglied durch die Durchlassfenster 47 % bis 76 %, durch die Ausgleichskanäle 15 % bis 28% und durch die Drosselkanäle 5 % bis 25% des Prozessfluids fließen.

Weitere Vorteile, Merkmale und Eigenschaften der Erfindung werden durch die folgende Beschreibung bevorzugter Ausführungen der Erfindung anhand der beiliegenden Zeichnungen deutlich, in denen zeigen:
- Fig. 1: eine Seitenansicht eines ersten erfindungsgemäßen Ventilkäfigs;
- Fig. 2: eine Seitenansicht eines anderen erfindungsgemäßen Ventilkäfigs; und
- Fig. 3: eine Querschnittsansicht eines Stellventils mit einem erfindungsgemäßen Ventilkäfig und darin geführtem Ventilkolben.

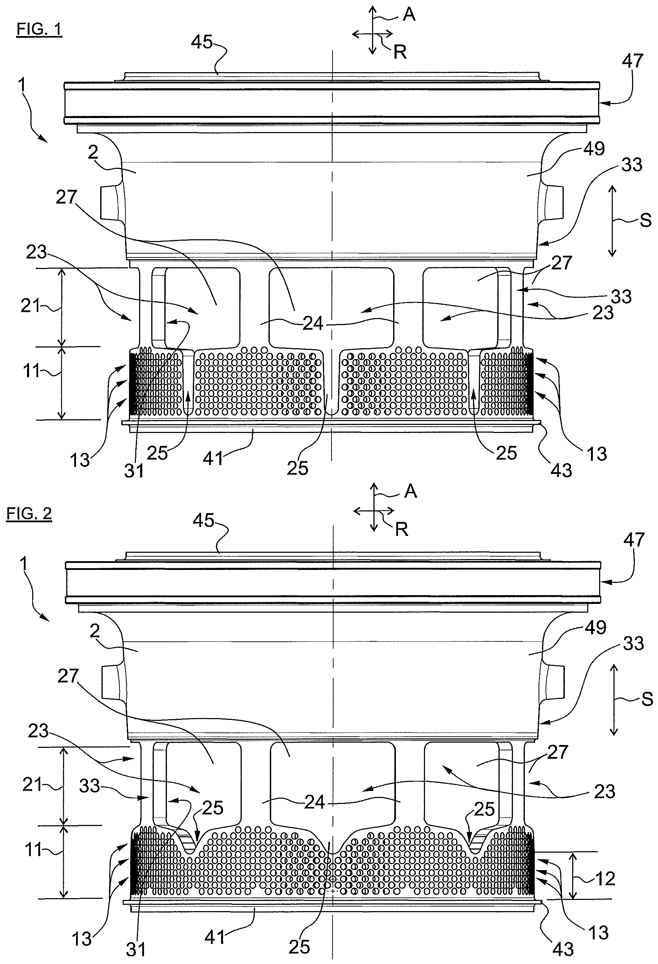

In Fig. 1 bis 3 ist ein erfindungsgemäßer Ventilkäfig im Allgemeinen mit der Bezugsziffer 1 versehen. Als Hauptbestandteile umfasst der Ventilkäfig 1 einen Drosselbereich 11 und einen Durchlass- oder Volldurchflussbereich 21, wobei in den beiden Bereichen 11, 21 unterschiedlich große Öffnungen vorgesehen sind, durch die Prozessfluid strömen kann, so dass abhängig davon, welche und wie viele Öffnungen freigegeben sind, unterschiedliche Drosselquoten bereitgestellt werden.

Der erfindungsgemäße Ventilkäfig gemäß Fig. 1 besteht aus einer einstückig gefertigten Käfighülse mit hohlzylindrischem Querschnitt. Die Käfighülse 2 definiert mit ihrer hohlzylindrischen Form eine Axialrichtung A sowie orthogonal zu der Axialrichtung orientierte Radialrichtungen R. Der Ventilkäfig 1 ist dazu ausgelegt, dass eine Prozessfluidströmung durch einen axial stirnseitigen Einlassquerschnitt (in Fig. 1 nicht zu sehen) in den Ventilkäfig 1 einströmen kann, und durch Öffnungen in der Käfighülse 2 in unterschiedliche Radialrichtungen R durch die Käfighülse des Ventilkäfigs 1 hindurchfließen kann.

Der Einlass befindet sich bei dem Ventilkäfig gemäß Fig. 1 an dem in Axialrichtung A unten dargestellten ersten Axialende des Ventilkäfigs an einer ersten, unteren Stirnseite 41. An der Stirnseite 41 des Ventilkäfigs ist ein Flanschrand 43 vorgesehen, mit dem der Ventilkäfig 1 an einem (nicht dargestellten) Ventilgehäuse vorzugsweise abdichtend befestigt werden kann. Der Ringflansch 43 des Ventilkäfigs 1 kann beispielsweise im Montagezustand des Ventilkäfigs 1 abdichtend an der Oberseite eines ringförmigen Ventilsitzes anliegend angeordnet werden (nicht dargestellt).

An der gegenüberliegenden zweiten Stirnseite 45 des Ventilkäfigs, die in den Figuren oben dargestellt ist, umfasst der Ventilkäfig 1 einen auskragenden Ringflansch 47, der zwischen einem Käfigsitz eines Ventilgehäuses und einem Ventilgehäusedeckel gehalten werden kann (nicht dargestellt). Der am oberen Stirnende 45 des Ventilkäfigs 1 auskragende Ringflansch 47 kann über einen abgerundeten Übergangsbereichen in einen geschlossenen Wandabschnitt 49 übergehen.

Der geschlossene Wandbereich 49 erstreckt sich über etwa die Hälfte der axialen Erstreckung des Ventilkäfigs 1 und weist keine Öffnungen zwischen der Innenseite 31 und der Außenseite 33 des Ventilkäfigs 1 auf. In dem Wandabschnitt 49 ist die Käfighülse 2 also betriebsgemäß stets fluiddicht. Der Wandbereich 49 des Ventilkäfigs ist nahezu idealhohlzylindrisch und kann fertigungsbedingt leicht konisch mit einer Entformungsschräge ausgebildet sein. Zwischen dem Wandbereich 49 und dem unteren Ringflansch 43 umfasst der Ventilkäfig 1 einen Ausgleichsbereich 21 und einen Drosselbereich 11, die im Folgenden näher beschrieben werden.

Angrenzend an den Wandbereich 49 der Käfighülse 2 sind große Durchlassfenster oder Durchgangsfenster 27 in der Käfighülse 2 eingelassen, die sich von der Radialinnenseite 31 zur Radialaußenseite 33 der Käfighülse 2 erstrecken und so eine fensterartige Ausgleichsöffnung durch den Ventilkäfig 1 bereitstellen. Der Ventilkäfig 1 gemäß Fig. 1 hat acht solcher Durchlassfenster 27, die in Umfangsrichtung gleichmäßig entlang des Umfangs der Käfighülse 2 verteilt angeordnet sind. Zwischen den Durchlassfenstern 27 erstrecken sich in Axialrichtung massive Stützsäulen 24, die die Haltekräfte aufnehmen, mit denen der Ventilkäfig zwischen dem Ventilgehäusedeckel und dem Ventilsitz verspannt ist (nicht dargestellt). Aufgrund der Seitenansicht sind nur die vorderen vier Stützsäulen 24 sichtbar und verdecken die Sicht auf die dahinerliegenden vier; auch sind nur fünf der acht Durchlassfenster 27 erkennbar.

Die Querschnittsfläche oder Öffnungsfläche der Durchlassfenster 27 ist im Wesentlichen rechteckig mit abgerundeten Ecken und erstreckt sich in Umfangsrichtung über etwa 45° der Käfighülse 2 und in Axialrichtung A über etwa die Hälfte des Öffnungsbereichs, in dem Öffnungen durch die Ventilhülse 2 in Radialrichtung vorgesehen sind. Die großen Durchlassfenster 27 gestatten eine Prozessfluidströmung durch den Ventilkäfig, der einen nahezu vernachlässigbar geringen Strömungswiderstand des Ventilkäfigs 1 auf die Prozessfluidströmung bewirkt, weil die Durchlassfenster 27 eine Querschnittsfläche aufweisen, die größer ist als die Hälfte der stirnseitigen Einlassfläche des Ventilkäfigs 1. Der axiale Bereich, in dem die großen Durchlassfenster 27 sich durch die Käfighülse 2 des Ventilkäfigs 1 erstrecken, kann als Volldurchflussbereich 21 bezeichnet werden.

Neben dem Ausgleichsbereich 21 weist der Ventilkäfig 1 einen Drosselbereich 11 auf, der sich in Axialrichtung A von axial untersten Drosselkanälen 13 bis zu axial obersten Drosselkanälen 13 erstreckt. In dem Drosselabschnitt 11 sind mehrere, d.h. Dutzende bis Hunderte, eventuell sogar Tausende, Drosselkanäle 13 angeordnet. Die Drosselkanäle 13 sind im Wesentlichen gleichmäßig über den Drosselbereich 11 verteilt angeordnet. Gemäß Fig. 1 sind die Drosselkanäle 13 in Form von sich von der Innenseite 31 zur Außenseite 33 der Käfighülse 2 erstreckende Bohrungen realisiert, die einen im Wesentlichen konstanten, kreisförmigen Querschnitt aufweisen. Die Drosselkanäle 13 haben alle die gleiche Form und Größe. Im Verhältnis zu der Wanddicke der Drosselhülse 2, also im Verhältnis zu dem Radialabstand zwischen Innenseite 31 und Außenseite 33 der Drosselhülse 2, ist der Querschnitt eines jeden Drosselkanals 13 deutlich kleiner, insbesondere misst der Durchmesser eines Drosselkanals 13 weniger als die Hälfte, vorzugsweise weniger als ein Drittel seiner Länge.

Die Drosselkanäle 13 haben eine sehr viel kleinere Querschnittsfläche als die Durchlassfenster 27, so dass es in den Drosselkanälen 13 durch die Einfluss- und Ausflusseffekte und/oder durch Wandreibung zu deutlichem Druckverlust bei einer Prozessfluidströmung von der Innenseite zur Außenseite des Ventilkäfigs 1 kommt. Diese druck- und/oder strömungsgeschwindigkeitsreduzierende Funktion der Drosselkanäle 13 bestimmt maßgeblich das betriebsgemäße Verhalten des Ventilkäfigs 1 mit teilweise oder gerade vollständig freigegebenem Drosselbereich 11 (Drosselbetrieb). Der Drosselbereich 11 erstreckt sich in Axialrichtung A exakt über den Bereich, in dem von den Drosselkanälen 13 Durchgänge durch die Ventilhülse 2 bereitgestellt sind. In dem Drosselbereich 11 sind die Drosselkanäle 13 derart angeordnet, dass in Axialrichtung A kein Ventilkäfig-Ringbereich frei von Drosselkanälen 13 ist, so dass in dem Drosselbereich 11 keine Totzone entsteht. Das heißt, dass, wenn man einen Radialquerschnitt bildet, auf dem orthogonal die Axialrichtung A des Ventilkäfigs 1 steht, jeder beliebige Radialquerschnitt in dem Drosselbereich 11 an beliebiger axialen Position mit wenigstens einem Drosselkanal 13 belegt ist.

Ausgehend von dem Durchlassfenster 27 erstreckt sich in den Drosselbereich 11 je ein rinnenartiger Ausgleichskanal 25, der eine Ausgleichsrinne bzw. einen Ausgleichsgraben mit parabolischer oder hyperbolischer Querschnittsgestalt aufweisen kann, und dessen Rinnenende über einen abgerundeten Übergangsbereich in das rechteckige Durchlassfenster 27 mündet. Das Durchlassfenster 27 bildet zusammen mit dem Ausgleichskanal 25 eine gemeinsame Gesamtquerschnittsfläche 23. Der rinnenförmige Ausgleichskanal 25 gestattet einen harmonischen Übergang von dem Drosselbereich 11 (Drosselbetrieb) in den Ausgleichsbereich 21 (Durchlassbetrieb).

Bei der in Fig. 1 dargestellten bevorzugten Ausführung eines Ventilkäfigs erstreckt sich der Ausgleichskanal 25 über die gesamte axiale Länge des Drosselbereichs 11. Die Querschnittsfläche 23 ist nahezu vollständig durch die Querschnittsfläche des Durchlassfensters 27 bereitgestellt. Der Ausgleichskanal 25 bildet im Verhältnis zu dem Durchlassfenster 27 nur einen geringfügigen Teil der gesamten Querschnittsfläche des Gesamtquerschnitts 23. Die Durchlassfenster 27 stellen die Funktion des Volldurchflussbereichs 21 bereit, um eine Prozessfluidströmung durch die Wand der Käfighülse 2 von deren Innenseite 31 zu deren Außenseite 33 zuzulassen, ohne dabei eine nennenswerte Drosselwirkung auf die Prozessfluidströmung auszuüben (Durchlassbetrieb). Der Ausgleichskanal 25 erlaubt es, dass ein harmonischer unmittelbarer Übergang des Drosselbereichs 11 zum Volldurchflussbereich 21 ohne dazwischenliegende Totzone bereitgestellt ist.

Die Breite eines Ausgleichskanals 25 kann im Verhältnis zu der Breite eines Drosselkanals 13 in Umfangsrichtung größer sein, und zwar im Wesentlichen über die gesamte axiale Länge, vorzugsweise mindestens 75 %, des Ausgleichkanal 25. Das vom Durchlassfenster 27 entfernte Ende eines Ausgleichkanals 25 kann derart gerundet sein, dass der Radius des Ausgleichskanals 25 größer ist als der Durchmesser des Querschnitts benachbarter Drosselkanäle 13. Die sich Axialrichtung A erstrecken Wände des Ausgleichskanals 25 erstrecken sich nahezu parallel, vorzugsweise mit einem Winkel von weniger als 5° zur Axialrichtung A des Ventilkäfigs.

Der in Fig. 2 dargestellte Ventilkäfig 1 unterscheidet sich von dem in Fig. 1 dargestellten im Wesentlichen nur durch die Form des Ausgleichkanals 25. Da der Ventilkäfig 1 im Übrigen praktisch baugleich ist, werden im Folgenden für dieselben Komponenten dieselben Bezugszeichen verwendet.

Der Ausgleichskanal 25 erstreckt sich bei dem Ventilkäfig 1 gemäß Fig. 2 über etwa ein Drittel der axialen Erstreckung des Drosselbereichs 11. Das von dem Durchlassfenster 27 entfernte Ende des Ausgleichskanals 25 weist eine Rundung auf, deren Radius in etwa dem Anderthalbfachen des Durchmessers eines benachbarten Drosselkanals 13 entspricht. Die Querschnittsform des Ausgleichkanals 25 ist im Wesentlichen keil- oder V-förmig mit einer Seitenwand, die in etwa 60° zur Axialrichtung A angewinkelt ist, aufweitend in Richtung des Ausgleichfensters 27. Der Übergang der Wandung des Ausgleichkanal 25 zum Durchgangsfenster 27 ist abgerundet ausgestaltet.

Im Unterschied zu der Ausführung gemäß Fig. 1 stellt der Ventilkäfig 1 gemäß Fig. 2 über mehr als die Hälfte des Drosselbereichs 11 einen reinen Drosselbereich 12 bereit, in dem ausschließlich Drosselkanäle 13 sich von der Innenseite 31 zu der Außenseite 33 des Ventilkäfigs 1 erstrecken. Dieser reine Drosselbereich 12 ist frei von Ausgleichskanälen. Bei der bevorzugten Ausführung gemäß Fig. 2 kann der Durchgangsbereich des Ventilkäfigs 1 demnach unterteilt werden in einen reinen Drosselbereich 12, in dem nur Drosselkanäle 13 angeordnet sind, einen gemischten Drosselbereich 11, in dem Drosselkanäle 13 und Ausgleichskanäle 25 angeordnet sind, und einen Volldurchflussbereich 21, in dem kein Drosselkanal sondern stattdessen Durchgangsfenster 27 angeordnet sind. Im Vergleich zu dem Ventilkäfig 1 gemäß Fig. 1 ergibt sich bei dem Ventilkäfig 1 gemäß Fig. 2 in dem reinen Drosselbereich 12 eine stärke Drosselquote über eine vergleichbare axiale Breite des Drosselbereichs 11 gemäß Fig. 1, in dem bereits zusätzlich zu dem Drosselkanal 13 ein Ausgleichskanal 25 größerer Querschnittsfläche vorgesehen ist.

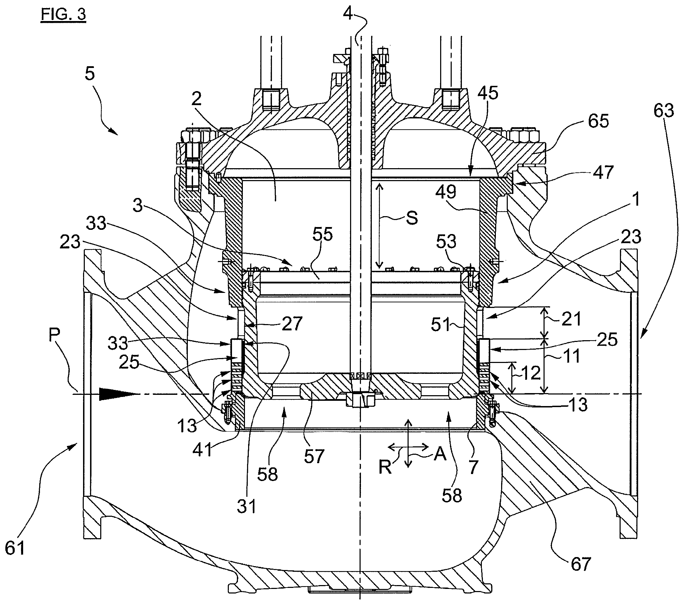

Fig. 3 zeigt eine schematische Querschnittsansicht eines Stellventils 5 mit einem Ventilkäfig 1 gemäß Fig. 2 und einem in dem Ventilkäfig 1 geführten Ventilkolben 3. Der Ventilkolben 3 befindet sich in Fig. 3 in einer Schließstellung, in der kein Prozessfluid durch den Ventilkäfig 1 fließen kann, so dass bei dem Stellventil 5 Prozessfluid nicht durch das Stellventil 5 fließt.

In der in Fig. 3 dargestellten Einbausituation sitzt die Käfighülse 2 zwischen einem Ventilsitz 7 und einem Ventilgehäusedeckel 65, wobei der Ventilgehäusedeckel 65 und der Ventilsitz 7 von dem Ventilgehäuse 67 getragen sind. An den Kontaktflächen zwischen Ventilgehäuse 67, Ventilsitz 7, Käfighülse 2 und/oder Ventilgehäusedeckel 65 sind Dichtungen vorgesehen.

Der Ventilkolben 3 hat eine Hülsenform mit einer Außenseite, die zur Innenseite 31 des Ventilkäfigs 1 korrespondiert. Der Ventilkolben 3 kann in Axialrichtung A bzw. eine zur Axialrichtung A parallelen Stellrichtung S translatorisch verschoben werden, um den Durchgangsbereich des Ventilkäfigs 1, der durch den Drosselbereich 11 und den Ausgleichsbereich 21 gebildet ist, freizugeben. Zu diesem Zweck ist der Ventilkolben 3 mit einer Ventilstange 4 verbunden, die durch einen (nicht dargestellten) Stellantrieb des Stellventils 5 betätigt werden kann.

Gemäß Fig. 3 befindet sich der Ventilkolben 3 in seiner in Stellrichtung S untersten Position und in einem Abdichteingriff mit einem ringförmigen Ventilsitz 7. Der Ventilkolben 3 hat einen hohlzylindrischen, U-förmigen Querschnitt, wobei die Umfangswände 51 außenseitig abdichtend mit der Innenseite 31 des Ventilkäfigs 1 und dem Ventilsitz 7 kooperieren. An dem in Fig. 3 oberen Ende des U-förmigen Querschnitts bzw. der Umfangswand 51 ist ein Dichtring 53 vorgesehen, der ortsfest an der Umfangswand 51 durch einen Haltering 55 befestigt ist. Der Dichtring 53 und der Dichteingriff des Ventilkolbens 3 mit dem Ventilsitz 7 bewirken in der dargestellten Schließstellung die Verhinderung eines Prozessfluidstroms durch das Stellventil 5.

Durch Betätigung der Ventilstange 4 durch den (nicht dargestellten) Antrieb wird der Ventilkolben 3 in Stellrichtung S translatorisch aus der Schließstellung (in Fig. 3 nach oben) bewegt. In dem unteren, sich radial von der Ventilstange 4 zur Umfangswand 51 erstreckenden plattenförmigen Tellerbereich 57 des U-förmigen Ventilkolbens 3 sind Druckausgleichsöffnungen 58 eingelassen, so dass der (nicht dargestellte) Stellantrieb bei einer Veränderung der Stellposition des Ventilkolbens 3 in Stellrichtung S keine oder nur sehr geringe Widerstände infolge des Drucks des Prozessfluids überwinden muss. Druckausgleichsöffnungen 58 realisieren keine Öffnung, die eine Prozessfluidströmung vom Eingang 61 zum Ausgang 63 des Stellventils 5 gestattet.

Der Ventilkolben 3 kann in Stellrichtung S soweit (in Fig. 3: nach oben) verlagern werden, dass die gesamte Axiallänge des Ventilkolbens 3, also dessen Umfangswände 51, sich in dem Wandbereich 49 des Ventilkäfigs 1 befindet (nicht dargestellt). In dieser Stellung des Ventilkolbens 3 sind sämtliche Durchgangsöffnungen durch die Käfighülse in Radialrichtung R von dem Ventilkolben 3 freigegeben, so dass eine große Durchflussmenge von Prozessfluid durch sämtliche radialen Öffnungen des Ventilkäfigs 1 fließen kann (Durchlassbetrieb). Diese Öffnungsstellung des Ventilkolbens 3 ist nicht dargestellt.

Beim Verlagern des Ventilkolbens 3 in Stellrichtung S ausgehend von der Schließstellung, die in Fig. 3 gezeigt ist, in Richtung der (nicht dargestellten) Öffnungsstellung, wird zunächst der reine Drosselbereich 12 des Ventilkäfigs 1 kontinuierlich freigegeben (Drosselbetrieb). Beim Freigeben des reinen Drosselbereichs 12 wird eine gemeinsame Öffnungsfläche des Ventilkäfigs 1 mit dem Ventilkolben 3 bereitgestellt, durch die Prozessfluid vom Eingang 61 zum Ausgang 63 des Stellventils 5 fließen kann. Aufgrund der Drosselwirkung der Drosselkanäle 13 erfährt das Prozessfluid dabei eine deutliche Drosselwirkung oder Druckreduzierung; der Druck des Prozessfluids am Eingang 61 des Stellventils 5 ist wesentlich höher als der Druck des Prozessfluids am Ausgang 63 des Stellventils 5. Es sei klar, dass die Beschreibung sich auf solche Strömungssituationen bezieht, bei denen das Prozessfluid am Eingang 61 in Richtung des Pfeiles P zum Ausgang 63 fließt. Grundsätzlich ist es denkbar, dass die Prozessfluid-Flussrichtung umgekehrt, entgegengesetzt zu der Richtung des Pfeiles P verläuft.

An der in Strömungsrichtung P stromaufwärtigen Stirnseite 41 des Ventilkäfigs 1 stellt der Ventilkäfig 1 eine Einlassfläche für Prozessfluid bereit, die von der Innenseite 31 des Ventilkäfigs 1 umrahmt ist. Im voll geöffneten Zustand des Stellventils, wenn sich der Ventilkolben 3 vollständig im Wandbereich 49 des Ventilkäfigs 1 befindet, fließt die Strömung des Prozessfluid vollständig in Axialrichtung A durch den Einlassquerschnitt und anschließend in Radialrichtung R durch den Drosselbereich 11 und/oder den Ausgleichsbereich 12 des Ventilkäfigs 1.

Je weiter der Ventilkolben 3 aus der in Fig. 3 gezeigten Schließstellung aufgefahren wird, desto mehr Drosselkanäle 13 werden freigegeben, so dass der Strömungswiderstand, den der Ventilkäfig 1 auf die Prozessfluidströmung ausübt, abhängig von der Stellposition des Ventilkolbens 3 allmählich sinkt. Dabei werden zunächst nur kleine Durchflussmengen zugelassen. Nachdem der Ventilkolben in Axialrichtung A entlang des gesamten reinen Drosselbereichs 12 verlagern wurde, beginnt der Ventilkolben 3 sich in dem Teil des Drosselbereichs 11 zu bewegen, in dem Ausgleichskanäle 25 sich erstrecken. Da die Kanalquerschnittsfläche des rinnenförmigen Ausgleichskanals 25 gegenüber den sehr viel größeren Durchlassfenstern 27 sehr klein bemessen ist und auch gegenüber dem Einlassquerschnitt sehr klein bemessen ist, beeinträchtigt der Ausgleichskanal 25 die Drosselwirkung in dem Drosselabschnitt zunächst praktisch nicht und später nur geringfügig. Die Durchflussmenge von Prozessfluid ist im Drosselbetrieb des Stellventils folglich deutlich kleiner als im Durchlassbetrieb mit insbesondere vollständig freigelegten Durchlassfenstern 27.

Je weiter der Ventilkolben 3 in Richtung Öffnungsstellung verlagern wird, desto größer wird die vom Drosselkolben 3 freigegebene Querschnittsfläche des Ausgleichskanals 25. Gleichzeitig werden, da der Ventilkolben sich immer noch im Drosselbereich 11 des Ventilkäfigs 1 befindet, immer mehr Drosselkanäle 13 freigegeben (Drosselbetrieb).

Wenn sich der Ventilkolben 3 in dem (in Fig. 3 oberen) Endrand des Drosselbereichs 11 befindet, also der von der stromaufwärtigen Stirnseite 41 entferntesten Stelle, an der sich noch mindestens ein Drosselkanal 13 befindet, ist wenigstens ein Ausgleichskanal 25 von dem Ventilkolben 3 ebenfalls freigegeben. Wenn der Drosselkolben 3 dann den Drosselbereich 11 verlässt und in den Volldurchflussbereich 21 eintritt, erfolgt dies, ohne dass der Ventilkolben sich durch eine Totzone bewegen muss, in der trotz Bewegung des Ventilkolbens sich keine Änderung des Volumenstroms durch das Stellventil 5 einstellt. Dank des Ausgleichskanals 25 erfolgt eine kontinuierliche Volumenstromänderung beim Übergang des Ventilkolbens 3 aus dem Drosselbereich 11 (Drosselbetrieb) in den Ausgleichsbereich 21 (Durchlassbetrieb) vorzugsweise ohne knick- oder sprungartige Änderung des Volumenstroms.

Wenn der Ventilkolben 3 in dem Volldurchflussbereich 21 weiter in Richtung Öffnungsstellung verlagern wird, wird zunehmend der große Querschnitt des Durchlassfensters 27 des Ventilkäfigs 1 freigegeben, bis der Ventilkolben 3 die Öffnungsstellung erreicht und sämtliche Kanäle des Stellventils vollständig freigegeben sind. Dies lässt sehr große Durchflussmengen zu.

Umgekehrt läuft das Betätigungsverfahren zum Schließen des Ventils 5 entsprechend unter allmählicher Verringerung der Öffnungsfläche und des Volumenstroms ab.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Ventilkäfig
- 2: Käfighülse
- 3: Ventilkolben
- 4: Ventilstange
- 5: Stellventil
- 7: Ventilsitz
- 11: Drosselbereich
- 12: reiner Drosselbereich
- 13: Drosselkanal
- 21: Volldurchflussbereich
- 23: gemeinsame Gesamtquerschnittsfläche
- 24: Stützsäulen
- 25: Ausgleichskanal
- 27: Durchlassfenster
- 31: Innenseite
- 33: Außenseite
- 41, 45: Stirnseite
- 43: Flanschrand
- 47: Ringflansch
- 49: Wandabschnitt
- 51: Umfangswand
- 53: Dichtring
- 55: Haltering
- 57: Tellerbereich
- 58: Druckausgleichsöffnung
- 61: Eingang
- 63: Ausgang
- 65: Gehäusedeckel
- 67: Ventilgehäuse
- A: Axialrichtung
- P: Strömungsrichtung
- R: Radialrichtung
- S: Stellrichtung

## Patentansprüche

1. Hülsenförmiger Ventilkäfig (1) zum Aufnehmen eines Ventilglieds, wie eines Ventilkolbens (3), eines Stellventils (5) einer prozesstechnischen Anlage, wie einer chemischen Anlage, einer Lebensmittel verarbeitenden Anlage, einem Kraftwerk oder dergleichen, wobei der Ventilkäfig (1) dazu ausgelegt ist, das Ventilglied relativ zum Ventilkäfig (1) zwischen einer Schließstellung, in der das Ventilglied eine Strömung von Prozessfluid durch das Stellventil (5) verhindert, und einer Öffnungsstellung, in der der Ventilkäfig (1) mit dem Ventilglied eine Öffnungsfläche für eine Prozessfluidströmung freigibt, entlang einer Stellrichtung (S) zu führen und abhängig von der Stellposition des Ventilglieds unterschiedliche Drosselquoten bereitzustellen, umfassend
einen Drosselbereich (11) für kleine, insbesondere druckreduzierte Durchflussmengen der Prozessfluidströmung mit mehreren Drosselkanälen (13), die sich von einer Innenseite (31) des Ventilkäfigs (1) an dessen Außenseite (33) erstrecken,
einen in Stellrichtung (S) zum Drosselbereich (11) benachbarten, insbesondere im Wesentlichen drosselungsfreien, Volldurchflussbereich (21) für große Durchflussmengen der Prozessfluidströmung,
wobei in dem Ventilkäfig (1) wenigstens ein sich von der Innenseite (31) an die Außenseite (33) erstreckender Ausgleichskanal (25) eingebracht ist, der derart von dem Volldurchflussbereich (21) in den Drosselbereich (11) mündet, dass, bevor das Ventilglied sämtliche Drosselkanäle (13) freigibt, der Ausgleichskanal (25) freigegeben ist, wobei der Ventilkäfig (1) wenigstens ein außerhalb des Drosselbereichs (11) angeordnetes Durchlassfenster (27) für die großen Durchflussmengen aufweist,
**dadurch gekennzeichnet, dass** die Querschnittsfläche des sich in den Drosselbereich (11) erstreckenden Teils eines Ausgleichskanals (25) weniger als die Hälfte der gesamten, gemeinsamen Querschnittsfläche (23) des Durchlassfensters (27) und des Ausgleichskanals (25) bildet.

2. Hülsenförmiger Ventilkäfig (1) zum Aufnehmen eines Ventilglieds, wie eines Ventilkolbens (3), eines Stellventils (5) einer prozesstechnischen Anlage, wie einer chemischen Anlage, einer Lebensmittel verarbeitenden Anlage, einem Kraftwerk oder dergleichen, wobei der Ventilkäfig (1) dazu ausgelegt ist, das Ventilglied relativ zum Ventilkäfig (1) zwischen einer Schließstellung, in der das Ventilglied eine Strömung von Prozessfluid durch das Stellventil (5) verhindert, und einer Öffnungsstellung, in der der Ventilkäfig (1) mit dem Ventilglied eine Öffnungsfläche für eine Prozessfluidströmung freigibt, entlang einer Stellrichtung (S) zu führen und abhängig von der Stellposition des Ventilglieds unterschiedliche Drosselquoten bereitzustellen, umfassend
einen Drosselbereich (11) für kleine, insbesondere druckreduzierte Durchflussmengen der Prozessfluidströmung mit mehreren Drosselkanälen (13), die sich von einer Innenseite (31) des Ventilkäfigs (1) an dessen Außenseite (33) erstrecken,
einen in Stellrichtung (S) zum Drosselbereich (11) benachbarten, insbesondere im Wesentlichen drosselungsfreien, Volldurchflussbereich (21) für große Durchflussmengen der Prozessfluidströmung,
wobei in dem Ventilkäfig (1) wenigstens ein sich von der Innenseite (31) an die Außenseite (33) erstreckender Ausgleichskanal (25) eingebracht ist, der derart von dem Volldurchflussbereich (21) in den Drosselbereich (11) mündet, dass, bevor das Ventilglied sämtliche Drosselkanäle (13) freigibt, der Ausgleichskanal (25) freigegeben ist,
**dadurch gekennzeichnet, dass** der Ventilkäfig (1) im Drosselbereich (11) Drosselkanäle (13) unterschiedlicher Form und/oder Größe aufweist.

3. Hülsenförmiger Ventilkäfig (1) nach Anspruch 1, **dadurch gekennzeichnet, dass** die Querschnittsfläche des sich in den Drosselbereich (11) erstreckenden Teils eines Ausgleichskanals (25) weniger als ein Drittel, zwischen 5% und 20% oder weniger als 5%, insbesondere weniger als 1%, der gesamten, gemeinsamen Querschnittsfläche (23) des Durchlassfensters (27) und des Ausgleichskanals (25) bildet.

4. Hülsenförmiger Ventilkäfig (1) nach einem der vorstehenden Ansprüche, dadurch **gekenn-zeichnet**, dass der wenigstens eine Ausgleichskanal (25) mit einem abgerundeten Übergangsbereich in das Durchlassfenster (27) übergeht.

5. Hülsenförmiger Ventilkäfig (1) nach einem der Ansprüche 1 oder 3 bis 4, **dadurch gekennzeichnet, dass** das wenigstens eine Durchlassfenster (27) genau einen Ausgleichskanal (25) aufweist und/oder dass jedes Durchlassfenster (27) wenigstens einen Ausgleichskanal (25) aufweist.

6. Hülsenförmiger Ventilkäfig (1) nach einem der vorstehenden Ansprüche, **dadurch gekennzeichnet, dass** der wenigstens eine Ausgleichskanal (25) einen in Stellrichtung (S) konkaven, insbesondere hyperbolischen oder parabolischen, Aussparungsquerschnitt in dem Ventilkäfigs (1) bildet.

7. Hülsenförmiger Ventilkäfig (1) nach einem der vorstehenden Ansprüche, **dadurch gekennzeichnet, dass** sich der wenigstens eine Ausgleichskanal (25) in Stellrichtung (S) über wenigstens 1%, 5%, 10%, 15%, 25%, 50%, 75%, 90% und/oder höchstens 95%, 50%, 30% oder 10% des Drosselbereichs (11) oder den gesamten Drosselbereich (11) erstreckt.

8. Hülsenförmiger Ventilkäfig (1) nach einem der vorstehenden Ansprüche, **dadurch gekennzeichnet, dass** die mehreren Drosselkanäle (13) je eine runde, vorzugsweise kreisförmige Querschnittsfläche definieren, wobei insbesondere Bohrungen durch den Ventilkäfig (1) die Drosselkanäle (13) realisieren.

9. Hülsenförmiger Ventilkäfig (1) nach einem der vorstehenden Ansprüche, **dadurch gekennzeichnet, dass** die Größe der Öffnungsfläche unterschiedlicher Drosselkanäle (13) in Stellrichtung (S) zum Volldurchflussbereich (21) hin zunimmt.

10. Hülsenförmiger Ventilkäfig (1) nach einem der vorstehenden Ansprüche, **dadurch gekennzeichnet, dass** der Ventilkäfig (1) im Drosselbereich (11) Drosselkanäle (13) gleicher Form und Größe aufweist.

11. Hülsenförmiger Ventilkäfig (1) nach einem der vorstehenden Ansprüche, **dadurch gekennzeichnet, dass** der Ventilkäfig (1) einstückig ist.

12. Stellventil (5) für eine prozesstechnische Anlage, wie eine chemische Anlage, eine Lebensmittel verarbeitenden Anlage, ein Kraftwerk oder dergleichen, aufweisend einen hülsenförmigen Ventilkäfig (1) nach einem der vorstehenden Ansprüche und ein in dem Ventilkäfig aufgenommenes Ventilglied, wie einem Ventilkolben (3).

13. Verfahren zum Betätigen eines Stellventils (5) einer prozesstechnischen Anlage, wie einer chemischen Anlage, einer Lebensmittel verarbeitenden Anlage, einem Kraftwerk oder dergleichen, wobei das Stellventil (5) einen Ventilkäfig (1) und ein Ventilglied, wie einen Ventilkolben (3), aufweist, wobei
das Ventilglied relativ zu dem Ventilkäfig (1), vorzugsweise von dem Ventilkäfig (1) geführt, zum Einstellen einer Prozessfluidströmung von einer Schließstellung, in der mit dem Ventilglied verhindert wird, dass Prozessfluid durch das Stellventil strömt, in eine Öffnungsstellung verlagert wird, in der vom Ventilkäfig (1) und dem Ventilglied gemeinsam eine Öffnungsfläche für die Prozessfluidströmung freigegeben wird,
wobei beim Verlagern des Ventilglieds von der Schließstellung in Richtung zur Öffnungsstellung vom Ventilglied zunächst ein Drosselbereich (11) des Ventilkäfigs (1) freigegeben wird, um eine kleine, insbesondere druckreduzierte Durchflussmenge von Prozessfluid durch mehrere Drosselkanäle (13) zuzulassen,
wobei, nachdem der Drosselbereich (11) von dem Ventilglied freigegeben wird, ein Volldurchflussbereich (21) mit einem außerhalb des Drosselbereichs (11) angeordneten Durchlassfenster (27) des Ventilkäfigs (11) für große Durchflussmengen von Prozessfluid durch den Ventilkäfig (1) freigegeben wird
und wobei von dem Ventilglied ein Ausgleichskanal (25) freigegeben wird, der aus dem Volldurchflussbereich (21) in den Drosselbereich (11) mündet, bevor sämtliche Drosselkanäle (13) durch das Ventilglied freigegeben werden,
**dadurch gekennzeichnet, dass** weniger als die Hälfte der gesamten, gemeinsamen Querschnittsfläche (23) des Durchlassfensters (27) und des Ausgleichskanals (25) freigegeben wird, bevor sämtliche Drosselkanäle (13) durch das Ventilglied freigegeben werden.

14. Verfahren nach Anspruch 13, **dadurch gekennzeichnet, dass** beim Verlagern des Ventilglieds von der Schließstellung in die Öffnungsstellung der Volumenstrom der Prozessfluidströmung abhängig von einer Stellposition des Ventilglieds kontinuierlich und streng monoton gesteigert wird.

15. Verfahren nach Anspruch 13 oder 14, **dadurch gekennzeichnet, dass** es gemäß der Funktionsweise des Ventilkäfigs (1) nach einem der Ansprüche 1 bis 11 oder des Stellventils nach Anspruch 12 funktioniert.

## Claims

1. A sleeve shaped valve cage (1) for receiving a valve member, such as a valve plug (3), of a control valve (5) of a processing plant, such as a chemical plant, a foodstuff processing plant, a power generating plant or the like, wherein the valve cage (1) is configured to guide the valve member relative to the valve cage (1) in a displacement direction (S) between a closed position in which the valve member prevents a stream of processing fluid through the control valve (5) and an open position in which the valve cage (1) together with the valve member releases an opening area for a stream of processing fluid and further configured to provide, dependent on the control position of the valve member, different reducing characteristics, the valve cage comprising:
a throttle section (11) for small, particularly pressure-reduced flow rates of the processing fluid, the throttle section having multiple throttle conduits (13) extending from an inside (31) of the valve cage (1) to its outside (33),
a high capacity flow section (21), particularly free of reduction, adjacent to the throttle section (11) in the displacement direction (S), for large flow rates of the processing fluid,
wherein
at least one balancing channel (25) extending from the inside (31) to the outside (33) is formed in the valve cage (1), which leads from the high capacity flow section (21) to the throttle section (11) such that, before the valve member releases all throttle conduits (13), the equalization channel (25) is released, wherein the valve cage (1) has at least a passage window (27) for the large flow rates arranged outside the throttle section (11),
**characterized in that** the cross sectional area of the part of the balancing channel (25) extending into the throttle section (11) forms less than half of the entire, mutual cross sectional area (23) of the passage window (27) and the balancing channel (25).

2. A sleeve shaped valve cage (1) for receiving a valve member, such as a valve plug (3), of a control valve (5) of a processing plant, such as a chemical plant, a foodstuff processing plant, a power generating plant or the like, wherein the valve cage (1) is configured to guide the valve member relative to the valve cage (1) in a displacement direction (S) between a closed position in which the valve member prevents a stream of processing fluid through the control valve (5) and an open position in which the valve cage (1) together with the valve member releases an opening area for a stream of processing fluid and further configured to provide, dependent on the control position of the valve member, different reducing characteristics, the valve cage comprising:
a throttle section (11) for small, particularly pressure-reduced flow rates of the processing fluid, the throttle section having multiple throttle conduits (13) extending from an inside (31) of the valve cage (1) to its outside (33),
a high capacity flow section (21), particularly free of reduction, adjacent to the throttle section (11) in the displacement direction (S), for large flow rates of the processing fluid,
wherein
at least one balancing channel (25) extending from the inside (31) to the outside (33) is formed in the valve cage (1), which leads from the high capacity flow section (21) to the throttle section (11) such that, before the valve member releases all throttle conduits (13), the equalization channel (25) is released,
**characterized in that** the valve cage (1) has throttle channels (13) of different shape and/or size in the throttle section (11).

3. The sleeve shaped valve cage (1) according to claim 1, **characterized in that** the cross sectional area of the part of the equalization channel (25) extending into the throttle section (11) forming less than half, less than a third, between 5% and 20% or less than 5%, in particular less than 1% of the entire combined cross sectional area (23) of the passage window (27) and of the equalization channel (25).

4. The sleeve shaped valve cage (1) according to one of the preceding claims, **characterized in that** the at least one equalization channel (25) merges into the passage window (27) with a rounded transition area.

5. The sleeve shaped valve cage (1) according one of the claims 1 or 3 to 4, **characterized in that** the at least one passage window (27) includes exactly one equalization channel (25) and/or **in that** each passage window (27) includes at least one equalization channel (25).

6. The sleeve shaped valve cage (1) according one of the preceding claims, **characterized in that** the at least one equalization channel (25) in the displacement direction (S) forms a concave, in particular hyperbolic or parabolic, cavity cross section in the valve cage (1).

7. The sleeve shaped valve cage (1) according one of the preceding claims, **characterized in that** the at least one equalization channel (25) extends in the displacement direction (S) over at least 1%, 5%, 10%, 15%, 25%, 50%, 75%, 90% and/or at most 95%, 50%, 30%, or 10% of the throttle section (11), or over the entire throttle section (11).

8. The sleeve shaped valve cage (1) according one of the preceding claims, **characterized in that** the multiple throttle conduits (13) each define a round, preferably circular, cross sectional area, wherein in particular drilled holes through the valve cage (1) realize the throttle conduits (13).

9. The sleeve shaped valve cage (1) according one of the preceding claims, **characterized in that** the size of the opening area of different throttle conduits (13) increases in the displacement direction (S) towards the high capacity flow section (21).

10. The sleeve shaped valve cage (1) according one of the preceding claims, **characterized in that** the valve cage (1) comprises throttle conduits (13) of the same shape and size in the throttle section (11).

11. The sleeve shaped valve cage (1) according one of the preceding claims, **characterized in that** the valve cage (1) consist of one piece.

12. Control valve (5) for a processing plant, such as a chemical plant, a foodstuff processing plant, a power generating plant or the like, comprising a sleeve shaped valve cage (1) according to the preceding claims and a valve member, such as a valve plug (3) received within the valve cage (1).

13. Method for operating a control valve (5) of a processing plant, such as a chemical plant, a foodstuff processing plant, a power generating plant, or the like, wherein the control valve (5) comprises a valve cage (1) and a valve member, such as a valve plug (3), wherein
the valve member is displaced relative to the valve cage (1) for controlling stream of process fluid, preferably guided by the valve cage (1), from a closed position in which the valve member prevents that process fluid streams through the control valve into an open position in which the valve cage (1) and the valve member together open an common orifice area for the stream of process fluid,
wherein, while displacing the valve member from the closed position in the direction towards the open position, the valve member first releases a throttle section (11) of the valve cage (1) for allowing small, in particular pressure-reduced, flow rates of process fluid through multiple throttle conduits (13),
wherein, after the throttle section (11) is released by the valve member, a high capacity flow section (21) with a passage window (27) arranged outside the throttle section (11) of the valve cage for large flow rates of the processing fluid through the valve cage (1) is released
and wherein a balancing channel (25) is released by the valve member, which leads from the high capacity flow section (21) to the throttle section (11) such that, before the valve member releases all throttle conduits (13), the equalization channel (25) is released,
**characterized in that** less than half of the entire common scross sectional area (23) is released before all throttle conduits (13) are released by the valve member.

14. The method according to claim 13, **characterized in that**, while displacing the valve member from the closed position into the open position, the flow rate of the process fluid stream is continuously and strictly monotonously increased dependent upon a control position of the valve member.

15. The method according to claim 13 or 14, **characterized in that** it functions in accordance with the function of valve cage (1) of one of the claims 1 to 11 or according to the control valve of claim 12.

## Revendications

1. Cage de soupape en forme de manchon (1) destinée à recevoir un élément de soupape, comme un piston de soupape (3), une soupape de réglage (5) d'une installation technique de traitement, comme une installation chimique, une installation transformant des aliments, une centrale électrique ou similaire, la cage de soupape (1) étant conçue pour guider l'élément de soupape par rapport à la cage de soupape (1) entre une position de fermeture dans laquelle l'élément de soupape empêche un écoulement de fluide de traitement à travers la soupape de réglage (5), et une position d'ouverture dans laquelle la cage de soupape (1) dégage avec l'élément de soupape une surface d'ouverture pour un écoulement de fluide de traitement le long d'un sens de réglage (S) et pour établir des taux d'étranglement différents en fonction de la position de réglage de l'élément de soupape, comprenant
une zone d'étranglement (11) pour de petites quantités d'écoulement, en particulier à pression réduite, de fluide de traitement, comportant plusieurs canaux d'étranglement (13) qui s'étendent depuis une face interne (31) de la cage de soupape (1) au niveau de sa face extérieure (33),
une zone d'écoulement intégral (21) voisine dans le sens de réglage (S) de la zone d'étranglement (11), en particulier sensiblement sans étranglement, pour de grandes quantités d'écoulement de fluide de traitement,
étant installé dans la cage de soupape (1) au moins un canal de compensation (25) s'étendant depuis la face interne (31) jusqu'à la face externe (33) et qui débouche depuis la zone d'écoulement intégral (21) dans la zone d'étranglement (11) de manière à ce que, avant que l'élément de soupape dégage tous les canaux d'étranglement (13), le canal de compensation (25) soit dégagé, la cage de soupape (1) présentant au moins une fenêtre de passage (27) disposée hors de la zone d'étranglement (11) pour les grandes quantités d'écoulement,
**caractérisée en ce que** la surface de section transversale de la partie s'étendant dans la zone d'étranglement (11) d'un canal de compensation (25) représente moins de la moitié de l'ensemble de la surface de section transversale commune (23) de la fenêtre de passage (27) et du canal de compensation (25).

2. Cage de soupape en forme de manchon (1) destinée à recevoir un élément de soupape, comme un piston de soupape (3), une soupape de réglage (5) d'une installation technique de traitement, comme une installation chimique, une installation transformant des aliments, une centrale électrique ou similaire, la cage de soupape (1) étant conçue pour guider l'élément de soupape par rapport à la cage de soupape (1) entre une position de fermeture dans laquelle l'élément de soupape empêche un écoulement de fluide de traitement à travers la soupape de réglage (5), et une position d'ouverture dans laquelle la cage de soupape (1) dégage avec l'élément de soupape une surface d'ouverture pour un écoulement de fluide de traitement le long d'un sens de réglage (S) et pour établir des taux d'étranglement différents en fonction de la position de réglage de l'élément de soupape, comprenant
une zone d'étranglement (11) pour de petites quantités d'écoulement, en particulier à pression réduite, de fluide de traitement, comportant plusieurs canaux d'étranglement (13) qui s'étendent depuis une face interne (31) de la cage de soupape (1) au niveau de sa face extérieure (33),
une zone d'écoulement intégral (21) voisine dans le sens de réglage (S) de la zone d'étranglement (11), en particulier sensiblement sans étranglement, pour de grandes quantités de débit de l'écoulement de fluide de traitement,
étant installé dans la cage de soupape (1) présente au moins un canal de compensation (25) s'étendant depuis la face interne (31) jusqu'à la face externe (33) et qui débouche depuis la zone d'écoulement intégral (21) dans la zone d'étranglement (11) de manière à ce que, avant que l'élément de soupape dégage tous les canaux d'étranglement (13), le canal de compensation (25) soit dégagé,
**caractérisée en ce que** la cage de soupape (1) présente dans la zone d'étranglement (11) des canaux d'étranglement (13) de formes et/ou de tailles différentes.

3. Cage de soupape en forme de manchon (1) selon la revendication 1, **caractérisé en ce que** la surface de section transversale de la partie s'étendant dans la zone d'étranglement (11) d'un canal de compensation (25) représente plus d'un tiers, entre 5 % et 20 % ou moins de 5 %, en particulier moins de 1 %, de l'ensemble de la surface de section transversale commune (23) de la fenêtre de passage (27) et du canal de compensation (25).

4. Cage de soupape en forme de manchon (1) selon une des revendications précédentes, **caractérisé en ce que** l'au moins un canal de compensation (25) transite par une section de transition arrondie dans la fenêtre de passage (27).

5. Cage de soupape en forme de manchon (1) selon une des revendications ou 3 à 4, **caractérisé en ce que** l'au moins une fenêtre de passage (27) présente précisément un canal de compensation (25) et/ou que chaque fenêtre de passage (27) présente au moins un canal de compensation (25).

6. Cage de soupape en forme de manchon (1) selon une des revendications précédentes, **caractérisé en ce que** l'au moins un canal de compensation (25) constitue une section transversale d'évidement concave, en particulier hyperbolique ou parabolique, dans le sens de réglage (S).

7. Cage de soupape en forme de manchon (1) selon une des revendications précédentes, **caractérisé en ce que** l'au moins un canal de compensation (25) s'étend dans le sens de réglage (S) sur au moins 1 %, 5 %, 10 %, 15 %, 25 %, 50 %, 75 %, 90 % et/ou au maximum 95 %, 50 %, 30 % ou 10 % de la zone d'étranglement (11) ou de l'ensemble de la zone d'étranglement (11).

8. Cage de soupape en forme de manchon (1) selon une des revendications précédentes, **caractérisé en ce que** les plusieurs canaux d'étranglement (13) définissent chacun une surface de section transversale ronde, de préférence circulaire, des alésages pratiqués dans la cage de soupape (1) constituant en particulier les canaux d'étranglement (13).

9. Cage de soupape en forme de manchon (1) selon une des revendications précédentes, **caractérisé en ce que** la taille de la surface d'ouverture des différents canaux d'étranglement (13) augmente dans le sens de réglage (S) en direction de la zone d'écoulement intégral (21).

10. Cage de soupape en forme de manchon (1) selon une des revendications précédentes, **caractérisé en ce que** la cage de soupape (1) présente dans la zone d'étranglement (11) des canaux d'étranglement (13) de forme et de taille identique.

11. Cage de soupape en forme de manchon (1) selon une des revendications précédentes, **caractérisé en ce que** la cage de soupape (1) est monobloc.

12. Soupape de réglage (5) pour installation technique de traitement, comme une installation chimique, une installation transformant des aliments, une centrale électrique ou similaire, présentant une cage de soupape en forme de manchon (1) selon une des revendications précédentes et un élément de soupape, comme un piston de soupape (3), reçu dans la cage de soupape.

13. Procédé d'actionnement d'une soupape de réglage (5) d'une installation technique de traitement, comme une installation chimique, une installation transformant des aliments, une centrale électrique ou similaire, la soupape de réglage (5) présentant une cage de soupape (1) et un élément de soupape, comme un piston de soupape (3),
dans lequel l'élément de soupape, de préférence guidé par rapport à la cage de soupape (1), de préférence par la cage de soupape (1), pour le réglage d'un écoulement de fluide de traitement depuis une position de fermeture dans laquelle l'élément de soupape empêche que du fluide de traitement s'écoule à travers la soupape de réglage, est passé dans une position d'ouverture dans laquelle une surface d'ouverture pour l'écoulement de fluide traitement est dégagée en commun par la cage de soupape (1) et l'élément de soupape,
lors du passage de l'élément de soupape de la position de fermeture à la position d'ouverture, une zone d'étranglement (11) de la cage de soupape (1) est d'abord dégagée l'élément de soupape pour permettre une petite quantité d'écoulement, en particulier à pression réduite, de fluide de traitement à travers plusieurs canaux d'étranglement (13), une fois que la zone d'étranglement (11) est dégagée par l'élément de soupape, une zone d'écoulement intégral (21) comportant une fenêtre de passage (27) disposée hors de la zone d'étranglement (11) de la cage de soupape (11) est dégagée pour de grandes quantités d'écoulement de fluide de traitement à travers la cage de soupape (1),
et dans lequel est libéré par l'élément de soupape un canal de compensation (25) qui débouche depuis la zone d'écoulement intégral (21) dans la zone d'étranglement (11) avant que tous les canaux d'étranglement (13) soit dégagés par l'élément de soupape, **caractérisé en ce que** moins de la moitié de l'ensemble de la surface de section transversale commune (23) de la fenêtre de passage (27) et du canal de compensation (25) est dégagée avant que l'ensemble des canaux d'étranglement (13) soient dégagés par l'élément de soupape.

14. Procédé selon la revendication 13, **caractérisé en ce que**, lors du passage de l'élément de soupape de la position de fermeture à la position d'ouverture, le flux volumique de l'écoulement de fluide de traitement est augmenté en fonction d'une position de réglage de l'élément de soupape en continu et de façon strictement monotone.

15. Procédé selon la revendication 13 ou 14, **caractérisé en ce qu'**il fonctionne suivant le mode de fonctionnement de la cage de soupape (1) selon une des revendications 1 à 11 ou de la soupape de réglage selon la revendication 12.
